# FASCICULE DE BREVET EUROPEEN

(11) **EP 1 687 374 B1**
(45) Date de publication et mention de la délivrance du brevet: **25.07.2007**
(21) Numéro de dépôt: 04805556.0
(22) Date de dépôt: 25.11.2004
(51) Int. Cl.: C08L 63/00, C08L 63/02, C08J 5/00, C08J 5/06, D01F 9/24

(54) **PROCEDE DE FABRICATION D'UNE FIBRE ORGANIQUE A BASE DE RESINE EPOXY ET D'AGENT REGULATEUR DE RHEOLOGIE ET TISSUS CORRESPONDANTS**
VERFAHREN ZUR HERSTELLUNG EINER ORGANISCHEN FASER AUF BASIS EINES EPOXIDHARZES UND EINES RHEOLOGIESTEUERNDEN MITTELS UND ENTSPRECHENDE TROCKENWAREN
METHOD FOR MAKING AN ORGANIC FIBRE BASED ON AN EPOXY RESIN AND A RHEOLOGY-CONTROLLING AGENT AND CORRESPONDING DRY GOODS

(30) Priorité: 25.11.2003 FR 0313805
(43) Date de publication de la demande: 09.08.2006
(73) Titulaire: Arkema France, 92800 Puteaux (FR)
(72) Inventeur: BONNET, Anthony, F-27170 Beaumont Le Roger (FR); LOERCH, Elisabeth, F-27170 BARC (FR); GERVAT, Laurent, F-40330 Brassempouy (FR); CIPRIANI, Régis, F-27180 Tournedos Bois Hubert (FR); BEAUME, François, F-27300 Bernay (FR)
(74) Mandataire: Mouttet, Marie-Paule
(86) Numéro de dépôt international: PCT/FR2004/003027
(87) Numéro de publication internationale: WO 2005/052054

(56) Documents cités:
- FR-A- 2 809 741
- FR-A- 2 841 252

## Description

La présente invention se rapporte à un procédé de fabrication de matériaux composites à base de fibres de renfort et de résines thermodures en particulier aux matériaux composites à base de résines thermodures comprenant un agent régulateur de rhéologie, présentant un comportement thermoplastique et pouvant être transformées en fils pouvant être tissés ou tricotés.

Un matériau composite est constitué d'une matrice organique et d'un renfort inorganique ou organique pouvant se présenter sous forme de fibres ou de textiles. La matrice organique pouvant être un matériau thermodur tel que décrit ci-après.

Un matériau thermodur est défini comme étant formé de chaînes polymères de longueur variable liées entre elles par des liaisons covalentes de manière à former un réseau tridimensionnel. Les matériaux thermodurs peuvent être obtenus par exemple par réaction d'une résine thermodurcissable telle qu'un époxy avec un durcisseur de type amine. Les matériaux thermodurs présentent de nombreuses propriétés permettant leur utilisation comme adhésifs structuraux ou comme matrice pour des matériaux composites ou encore dans les applications de protection de composants électroniques.

La fibre de renfort, qui peut comporter plusieurs milliers de filaments améliore les caractéristiques mécaniques de la structure composite. Elle peut être composée de verre, de carbone, d'aramide ou de tous autres matériaux organiques ou inorganiques apportant les caractéristiques recherchées.

Les matériaux époxy ont une densité de réticulation élevée, ce qui leur assure une température de transition vitreuse (Tg) élevée, qui confère au matériau d'excellentes propriétés thermomécaniques. Plus la densité de réticulation est élevée, plus haute est la Tg du matériau et par conséquent meilleures sont les propriétés thermomécaniques et plus haute est la température limite d'utilisation du matériau. Néanmoins leur mise en oeuvre reste très délicate car ce sont des liquides avant réaction, ce qui rend leur manipulation difficile. La réalisation de composites par les techniques habituelles présente des difficultés comme la gestion du stade B. En effet, le procédé habituellement utilisé par l'homme du métier passe par une étape de mouillage des fibres par la résine époxy avec une perte de matière due au phénomène de goutte observé, phénomène directement relié à la faible cohésion de la résine liquide.

Cette étape de mouillage est suivie d'une étape de pré-cuisson pour amener la résine thermodure à une conversion intermédiaire appelée stade B permettant une manipulation plus aisée. Ces différents procédés sont par exemple décrits dans l'ouvrage de Maurice Reyne « Technologie des composites » édition HERMES, 1998.

La demanderesse vient de trouver que des formulations spécifiques à base de matériaux thermodurcissables et d'agents régulateurs de rhéologie peuvent être transformées en filaments ou mèches et pouvant être tissés ou tricotés conjointement avec des fibres organiques ou inorganiques. Ceci permet d'obtenir des tissus ou des tricotages pouvant être manipulés avec une grande facilité et pouvant subir un procédé de compression à chaud pour être mise en forme et pour permettre la réaction de la formulation de matériaux thermodurcissables et d'agents régulateurs de rhéologie conduisant au matériau composite final.

Les formulations de l'invention comprennent une résine thermodurcissable et un copolymère à blocs ayant au moins un bloc miscible avec ladite résine, par exemple constitué majoritairement de motifs méthacrylate de méthyle, utilisé comme un agent de contrôle de la rhéologie et au moins un bloc non miscible. Ces matériaux peuvent être fabriqués par dissolution du copolymère dans la résine thermodurcissable suivie par l'ajout du durcisseur. Cette dissolution peut être par exemple réalisée par la technique d'extrusion. La technique d'extrusion permet aussi la production de filaments pouvant être transformés en mèches. Ces mèches de formulations de résines époxydes liquides et de copolymères à bloc présentent un comportement thermoplastique et sont tissées ou tricotées avec des fibres de renforts.

Le premier objet de l'invention est un procédé de fabrication d'un matériau composite comprenant une étape de transformation en filaments ou mèches d'une formulation constituée d'une résine thermodurcissable et d'un agent de contrôle de la rhéologie pouvant être obtenue par extrusion, par exemple à partir d'une formulation à base de matériaux thermodurcissables et d'agents régulateurs de rhéologie.

Un autre objet de l'invention est un tissu ou tricot obtenu selon le mode suivant :
a. Tissage ou tricotage des filaments ou fibres de l'invention avec des fibres de verre ou de carbone ou de tous autres types de matériaux organiques et inorganiques.
b. Réalisation des structures souhaitées avec le semi-produit obtenu en a selon des techniques habituelles de mise en oeuvre de semi-produits pour composites thermodurs, comme le drapage, le moulage, ou la réalisation de systèmes sandwich.
c. Réaction de la formulation pour obtenir un matériau composite, selon les techniques habituelles de mise en oeuvre des matériaux composites thermodurs, comme le formage à chaud.

La formulation de l'invention comprend :
- de 10 à 99 % en poids du poids total de la formulation d'au moins une résine thermodurcissable (I)
- de 1 à 80% en poids du poids total de la formulation d'un agent de contrôle de rhéologie (II) comprenant par exemple au moins un copolymère à blocs choisi parmi les copolymères à blocs S-B-M, B-M et M-B-M dans lesquels:
   ➢ chaque bloc est relié à l'autre au moyen d'une liaison covalente ou d'une ou plusieurs molécules intermédiaires reliées à l'un des blocs par une liaison covalente et à l'autre bloc par une autre liaison covalente,
   ➢ M est un polymère miscible avec la résine thermodurcissable, par exemple un homopolymère de méthacrylate de méthyle ou un copolymère (obtenu par la polymérisation d'un mélange de monomères comprenant au moins 50 % en poids de méthacrylate de méthyle) comprenant au moins 50% en poids de méthacrylate de méthyle,
   ➢ B est un polymère incompatible avec la résine thermodurcissable et avec le bloc M et sa température de transition vitreuse (Tg) est inférieure à la température d'utilisation du matériau thermodur,
   ➢ S est un polymère incompatible avec la résine thermodurcissable (I), et le bloc B et sa Tg ou sa température de fusion (Tf) est supérieure à la Tg de B,
- de 0 à 50 % en poids du poids total de la formulation d'au moins un matériau (III), choisi parmi les thermoplastiques, les additifs coeur-écorce, les élastomères fonctionnalisés, les copolymères S-B et les caoutchoucs réactifs ATBN ou CTBN.

La formulation de l'invention présente un comportement thermoplastique et peut être mise en oeuvre par les techniques habituelles de transformation de matériaux thermoplastiques mais ayant la faculté de réagir pour former un matériau thermodur. Cette formulation peut pendant la réaction se trouver dans un état parfaitement liquide ou caoutchouteux.

**S'agissant du matériau thermodur** il est défini comme étant formé de chaînes polymères de longueur variable liées entre elles par des liaisons covalentes de manière à former un réseau tridimensionnel.

A titre d'exemples on peut citer les cyanoacrylates, les bismaleimides et les résines époxy réticulées par un durcisseur.

Parmi les cyanoacrylates on peut citer les esters cyanoacryliques qui sont des matériaux thermodurs obtenus par polymérisation du monomère CH2=C(CN)COOR avec différents groupements R possibles (sans nécessité d'ajouter un durcisseur).

Les formulations thermodurcissables de type bismaléimide sont par exemple :
méthylènedianiline + benzophenone dianhydride + nadic imide
méthylènedianiline + benzophenone dianhydride + phenylacetylene
méthylènedianiline + anhydride maléique + maléimide.

Le matériau thermodur provient avantageusement de la réaction d'une résine époxy thermodurcissable et d'un durcisseur. Il est défini aussi comme tout produit de la réaction d'un oligomère porteur de fonctions oxirane et d'un durcisseur. De par les réactions mises en jeu lors de la réaction de ces résines époxy on aboutit à un matériau réticulé correspondant à un réseau tridimensionnel plus ou moins dense selon les caractéristiques de base des résines et durcisseurs employés.

**On entend par résine époxy,** désignée ci-après par E, tout composé organique possédant au moins deux fonctions de type oxirane, polymérisable par ouverture de cycle. Le terme "résines époxy" désigne toutes les résines époxy usuelles liquides à température ambiante (23°C) ou à température plus élevée. Ces résines époxy peuvent être monomériques ou polymériques d'une part, aliphatiques, cycloaliphatiques, hétérocycliques ou aromatiques d'autre part. A titre d'exemples de telles résines époxy, on peut citer le diglycidyl éther de résorcinol, le diglycidyl éther de bisphénol A, le triglycidyl p-amino phénol, le diglycidyléther de bromo-bisphénol F, le triglycidyléther de m-amino phénol, le tétraglycidyl méthylène dianiline, le triglycidyl éther de (trihydroxyphényl) méthane, les polyglycidyl éthers de phénol-formaldéhyde novolac, les polyglycidyls éthers d'orthocrésol novolac et les tétraglycidyl éthers de tétraphényl éthane. Des mélanges d'au moins deux de ces résines peuvent aussi être utilisés.

On préfère les résines époxy possédant au moins 1,5 fonctions oxirane par molécule et plus particulièrement les résines époxy contenant entre 2 et 4 fonctions oxirane par molécule. On préfère également les résines époxy possédant au moins un cycle aromatique comme les diglycidyls éthers de bisphénol A.

**S'agissant du durcisseur** de manière générale on utilise comme durcisseurs les durcisseurs des résines époxy qui réagissent à température ambiante ou à des températures supérieures à la température ambiante. A titre d'exemples non limitatifs on peut citer :
- Les anhydrides d'acide, parmi lesquels l'anhydride succinique,
- Les polyamines aromatiques ou aliphatiques, parmi lesquelles la diamino diphényl sulphone (DDS) ou encore la méthylène dianiline ou encore la 4,4'-Méthylènebis-(3-chloro-2,6-diéthylaniline) (MCDEA),
- La dicyandiamide et ses dérivés.
- Les imidazoles
- Les acides polycarboxyliques
- Les polyphénols.

**On entend par agent de contrôle de rhéologie,** un composé qui, mélangé avec le matériau thermodurcissable, permet à ce dernier de pouvoir être transformé par toutes les techniques de mise en oeuvre des thermoplastiques tout en conservant la faculté de réagir pour former un matériau thermodur. Avantageusement, on choisira un copolymère à blocs choisi parmi les copolymères à blocs S-B-M, B-M ou M-B-M dans lesquels :
➢ chaque bloc est relié à l'autre au moyen d'une liaison covalente ou d'une ou plusieurs molécules intermédiaires reliées à l'un des blocs par une liaison covalente et à l'autre bloc par une autre liaison covalente,
➢ M est un polymère miscible avec la résine thermodurcissable. De préférence, M est constitué de monomères de méthacrylate de méthyle ou contient au moins 20% en masse de méthacrylate de méthyle, de préférence au moins 50% en masse de méthacrylate de méthyle. Les autres monomères constituant le bloc M peuvent être des monomères acryliques ou non, être réactifs ou non. Par monomère réactif on entend : un groupement chimique capable de réagir avec les fonctions oxiranes des molécules époxy ou avec les groupements chimiques du durcisseur. A titre d'exemples non limitatifs de fonctions réactives on peut citer : les fonctions oxiranes, les fonctions amines, les fonctions carboxy. Le monomère réactif peut être l'acide (méth)acrylique ou tout autre monomère hydrolysable conduisant à ces acides. Parmi les autres monomères pouvant constituer le bloc M on peut citer à titre d'exemples non limitatifs le méthacrylate de glycidyle, le méthacrylate de tertiobutyle. Pour certaines applications exigeant une température d'utilisation du matériau composite élevée, il est préférable d'utiliser un bloc M constitué majoritairement de PMMA syndiotactique à au moins 75 % ce qui permet d'obtenir un bloc PMMA du copolymère avec une Tg élevée et ainsi conserver une température d'utilisation du matériau composite élevée.
➢ Avantageusement la Tg de B est inférieure à 0°C et de préférence inférieure à -40°C. Le monomère utilisé pour synthétiser le bloc B élastomérique peut être un diène choisi parmi le butadiène, l'isoprène, le 2,3-diméthyl-1,3-butadiène, le 1,3-pentadiène, le 2-phényl-1,3-butadiène. B est choisi avantageusement parmi les poly(diènes) notamment poly(butadiène), poly(isoprène) et leurs copolymères statistiques, ou encore parmi les poly(diènes) partiellement ou totalement hydrogénés. Parmi les polybutadiènes on utilise avantageusement ceux dont la Tg est la plus faible, par exemple le polybutadiène-1,4 de Tg (vers -90°C) inférieure à celle du polybutadiène-1,2 (vers 0°C). Les blocs B peuvent aussi être hydrogénés. On effectue cette hydrogènation selon les techniques habituelles. Le monomère utilisé pour synthétiser le bloc B élastomérique peut être aussi un (méth)acrylate d'alkyle. Les Tg correspondantes sont indiquées entre parenthèses après le monomère utilisé : l'acrylate d'éthyle (-24°C), l'acrylate de butyle, (-45°C), l'acrylate de 2-éthylhexyle (-60°C), l'acrylate d'hydroxyéthyle (-15°C) et le méthacrylate de 2-éthylhexyle (-10°C). On utilise avantageusement l'acrylate de butyle. Les acrylates de B sont différents de ceux du bloc M pour respecter la condition de B et M incompatibles. De préférence les blocs B sont constitués en majorité de polybutadiène-1,4. B est incompatible avec la résine thermodurcissable et avec le bloc M et sa température de transition vitreuse Tg est inférieure à la température d'utilisation du matériau thermodur,
➢ S est incompatible avec la résine thermodurcissable, et le bloc B et sa Tg ou sa température de fusion Tf est supérieure à la Tg de B. La Tg ou la Tf de S est avantageusement supérieure à 23°C et de préférence supérieure à 50°C. A titre d'exemples de blocs S on peut citer ceux qui dérivent de composés vinylaromatiques tels que styrène, α-méthyl styrène, vinyltoluène, et celles qui dérivent d'alkyl esters des acides acrylique et/ou méthacrylique ayant de 1 à 18 atomes de carbone dans la chaîne alkyle.

Le copolymère S-B-M, B-M ou M-B-M a une masse molaire moyenne en masse qui peut être comprise entre 10 000 g/mol et 500 000 g/mol, de préférence comprise entre 20000 et 200000 g/mol. Avantageusement, exprimée en fraction massique dont le total est 100%, sa composition sera :
Pour M : entre 10 et 80% et de préférence entre 15 et 70%.
Pour B : entre 2 et 80% et de préférence entre 5 et 70%.
Pour S : entre 10 et 88% et de préférence entre 15 et 85%.

Les copolymères blocs utilisés dans la composition de la présente invention peuvent être fabriqués par exemple par polymérisation anionique selon les procédés décrits dans les demandes de brevet EP 524.054 et EP 749.987 ou encore par polymérisation radicalaire contrôlée.

Avantageusement la proportion d'agent rhéologique est de 10 à 60% pour respectivement 90 à 40% de résine thermodure.

**Selon une forme préférée de l'invention** l'agent de contrôle de rhéologie comprend au moins un copolymère bloc S-B-M et au moins un copolymère bloc S-B. Il comprend avantageusement entre 5 et 80% de dibloc S-B pour respectivement de 95 à 20% de tribloc S-B-M.

**S'agissant du dibloc S-B** les blocs S et B sont incompatibles et ils sont constitués des mêmes monomères et éventuellement comonomères que les blocs S et les blocs B du tribloc S-B-M. Les blocs S et B peuvent être identiques ou différents des autres blocs S et B présents dans les autres copolymères blocs du modifiant choc dans le matériau thermodur.

Le dibloc S-B a une masse molaire moyenne en masse qui peut être comprise entre 10000 g/mol et 500000 g/mol, de préférence comprise entre 20000 et 200000 g/mol. Le dibloc S-B est avantageusement constitué d'une fraction massique en B comprise entre 5 et 95% et de préférence entre 5 et 60%.

De plus l'avantage de ces compositions est qu'il n'est pas nécessaire de purifier le S-B-M à l'issue de sa synthèse. En effet les S-B-M sont en général préparés à partir des S-B et la réaction conduit souvent à un mélange de S-B et S-B-M qu'on sépare ensuite pour disposer de S-B-M.

Selon une forme avantageuse une partie du S-B-M peut être remplacée par un dibloc S-B. Cette partie peut être jusqu'à 70% en poids du S-B-M.

On ne sortirait pas du cadre de l'invention en remplaçant tout ou partie du tribloc S-B-M par un pentabloc M-S-B-S-M ou M-B-S-B-M. Ils peuvent être preparés par polymérisation anionique comme les di ou triblocs cités plus haut mais en utilisant un amorçeur difonctionnel. La masse molaire moyenne en nombre de ces pentablocs est dans les mêmes intervalles que celle des triblocs S-B-M. La proportion des deux blocs M ensemble, des deux blocs B ou S ensemble est dans les mêmes intervalles que les proportions de S, B et M dans le tribloc S-B-M.

Les formulations de l'invention peuvent être préparées par mélange de la résine thermodure non encore réticulée à l'aide d'un dispositif de mélange conventionnel. On pourra utiliser toutes les techniques thermoplastiques permettant de réaliser un mélange homogène entre la résine thermodurcissable et l'agent de contrôle telles que l'extrusion. Le produit obtenu se présentera sous forme de filament ou de mèche. Le matériau ainsi obtenu non réagi ou partiellement réagi pourra ainsi se présenter sous la forme d'un matériau caoutchoutique manipulable. Cette mise en oeuvre se fera à une température ou la cinétique de réaction du matériau thermodurcissable est lente. Dans l'étape [c], au cours de la mise en oeuvre sous la forme d'objet fini et par simple augmentation de la température la résine thermodurcissable sera transformée en matériau thermodur. Lors de l'augmentation de température le matériau caoutchoutique en cours de réaction pourra selon la nature de la résine (II) et de l'agent (I) utilisé repasser à l'état liquide ou rester à l'état caoutchoutique.

Il est évident que cette invention peut être appliquée à une résine liquide réactive pouvant former après réaction un polymère linéaire ou branché présentant un comportement thermoplastique. On peut avec succès appliquer cette démarche par exemple aux résines acryliques sans sortir du cadre de l'invention.

Les objets finis de l'invention peuvent être utilisés dans diverses applications, comme dans les domaines du sport, de l'industrie, de l'automobile, de l'électronique, de l'aéronautique.

### Conditions de cuisson :

Ce sont les conditions habituelles.

On ne sortirait pas du cadre de l'invention en ajoutant dans la formulation les additifs habituels, tels que des thermoplastiques comme les polyethersulfones, les polysulfones, les polyetherimides, les polyphénylène éthers, des élastomères liquides ou des modifiant-chocs de type coeur-écorce. Les exemples suivants illustrent l'invention sans en limiter la portée.

On a utilisé les produits suivants :
Résine époxy : il s'agit d'un éther diglycidique du Bisphénol A **(DGEBA)** de masse molaire 383 g/mol avec un nombre moyen de groupe hydroxyle pour un groupe époxy de n= 0.075, commercialisé par la société VANTICO sous la référence commerciale LY556.
Durcisseur : il s'agit d'un durcisseur **amine** qui est une diamine aromatique, la 4,4'-Méthylènebis-(3-chloro-2,6-diéthylaniline) commercialisé par la société Lonza sous la référence commerciale LONZACURE M-DEA. Ce produit est caractérisé par un point de fusion compris entre 87°C et 90°C et une masse molaire de 310 g/mol.
**SBM1 :** il s'agit d'un copolymère tribloc S-B-M dans lequel S est du polystyrène, B est du polybutadiène et M du polyméthacrylate de méthyle. SBM1 contient 22% en fraction massique de polystyrène, 9% en fraction massique de polybutadiène et 69% en masse de polyméthacrylate de méthyle, obtenu par polymérisation anionique successivement d'un bloc polystyrène de masse molaire moyenne en masse 7 000 g/mol, d'un bloc polybutadiène de masse 11 000 g/mol et d'un bloc polyméthacrylate de méthyle de masse molaire moyenne en masse 84 000 g/mol. Ce produit a été préparé suivant le mode opératoire décrit dans EP 524-054 et dans EP 749-987. Ce produit présente trois transitions vitreuses, l'une de -90°C, l'autre de 95°C et la troisième de 130°C.
**SBM2 :** il s'agit d'un copolymère tribloc S-B-M dans lequel S est du polystyrène, B est du polybutadiène et M du PMMA contenant 12% en fraction massique de polystyrène, 18% en fraction massique de polybutadiène et 70% en masse de polyméthacrylate de méthyle, obtenu par polymérisation anionique successivement d'un bloc polystyrène de masse molaire moyenne en masse 14 000 g/mol, d'un bloc polybutadiène de masse 22 000 g/mol et d'un bloc polyméthacrylate de méthyle de masse molaire moyenne en masse 85 000 g/mol. Ce produit a été préparé suivant le mode opératoire décrit dans EP 524-054 et dans EP 749-987. Ce produit présente trois transitions vitreuses, l'une de -90°C, l'autre de 95°C et la troisième de 130°C.

### Conditions de cuisson :

Les mélanges sont cuits pendant 2 heures à 220°C.

### Mesure de la température de relaxation mécanique principale, Tα par analyse thermomécanique :

La mesure de Tα a été réalisée par analyse mécanique dynamique sur les échantillons post-cuits à l'aide d'un appareil Rhéométrics (Rheometrics Solid Analyser RSAII). Les échantillons de forme parallélépipédique (1 ^{*}2,5^{*}34mm³) sont soumis à un balayage en température entre 50 et 250°C à une fréquence de traction de 1 Hz. La température de transition vitreuse est prise au maximum de tan σ.

### Exemple 1 (selon l'invention)

Un précurseur époxyde DGEBA de la société DOW de masse 383 g/mol est mélangé à la stoéchiométrie avec un durcisseur amine MDEA. Ce mélange est réalisé en extrudeuse bi vis corotative de type Werner 40 avec ajout de 40 % de SBM1. Le jonc obtenu présentant un diamètre de 1 mm est bobiné en sortie d'extrudeuse. Ce jonc est co-tissé avec une fibre de verre de la société Owens Corning de tex 1200 présentant un ensimage de type 121A - RX. Le ratio verre sur formulation est de 1,5. Le co-tissé obtenu est facilement manipulable et ne présente aucun phénomène de goutte. Le co-tissé obtenu est placé sous presse pendant 2 heures à 220°C. Après réfroidissement la Tg obtenue est de 165°C et la Tα obtenue est de 172°C. Le matériau composite obtenu ne présente aucun gonflement dans le toluène.

### Exemple 2 (selon l'invention)

Un précurseur époxyde DGEBA de la société DOW de masse 383 g/mol est mélangé à la stoéchiométrie avec un durcisseur amine MDEA. Ce mélange est réalisé en extrudeuse bi vis corotative de type Werner 40 avec ajout de 40 % de SBM2. Le jonc obtenu présentant un diamètre de 1 mm est bobiné en sortie d'extrudeuse. Ce jonc est co-tissé avec une fibre de verre de la société Owens Corning de tex 1200 présentant un ensimage de type 121A - RX. Le ratio Verre sur formulation est de 1,5. Le co-tissé obtenu est facilement manipulable et ne présente aucun phénomène de goutte. Le co-tissé obtenu est placé sous presse pendant 2 heures à 220°C. Après réfroidissement la Tg obtenue est de 164,8°C et la Tα obtenue est de 171,5°C. Le matériau composite obtenu ne présente aucun gonflement dans le toluène.

### Exemple 3 (comparatif)

Un précurseur époxyde DGEBA de la société DOW de masse 383 g/mol est mélangé à la stoéchiométrie avec un durcisseur amine MDEA. Ce mélange est réalisé en extrudeuse bi vis corotative de type Werner 40 avec ajout de 40 % de SBS finaclear 520 de la société ATOFINA. Le matériau en sortie d'extrudeuse ne peut pas être granulé car il ne présente aucune tenue à l'état fondu.

### Exemple 4 (comparatif)

Un précurseur époxyde DGEBA de la société DOW de masse 383 g/mol est mélangé à la stoéchiométrie avec un durcisseur amine MDEA. Ce mélange est réalisé en extrudeuse bi vis corotative de type Werner 40 avec ajout de 40 % de D320 de la société ATOFINA. Le matériau en sortie d'extrudeuse ne peut pas être granulé car il ne présente aucune tenue à l'état fondu.

### Exemple 5 (selon l'invention)

Un précurseur époxyde DGEBA de la société DOW de masse 383 g/mol est mélangé à la stoechiométrie avec un durcisseur amine MDEA. Ce mélange est réalisé en extrudeuse bi vis corotative de type Werner 40 avec ajout de 40 % de SBM2. Le jonc obtenu présentant un diamètre de 1 mm est bobiné en sortie d'extrudeuse. Ce jonc est tissé pour former un tissu de mélange SBM - DGEBA - MDEA (mélange A). Ce tissu est ensuite disposé sur un tissu de verre pour former un sandwich A/tissu verre/A. Ce sandwich est ensuite placé dans une presse pendant 2 heures à 220°C. Après refroidissement la Tg obtenue est de 164,8°C et la Tα obtenue est de 171,4°C. Le matériau composite obtenu ne présente aucun gonflement dans le toluène.

### Exemple 6

Un précurseur époxyde DGEBA de la société DOW de masse 383 g/mol est mélangé à la stoéchiométrie avec un durcisseur amine MDEA. Ce mélange est réalisé en extrudeuse bi vis corotative de type Werner 40 avec ajout de 20 % de SBM2. Le jonc obtenu présentant un diamètre de 1 mm est bobiné en sortie d'extrudeuse. Ce jonc est co-tissé avec une fibre de verre de la société Owens Corning de tex 1200 présentant un ensimage de type 121A - RX. Le ratio Verre sur formulation est de 1,5. Le co-tissé obtenu est facilement manipulable et ne présente aucun phénomène de goutte. Le co-tissé obtenu est placé sous presse pendant 2 heures à 220°C. Après refroidissement la Tg obtenue est de 164,8°C et la Tα obtenue est de 171,7°C. Le matériau composite obtenu ne présente aucun gonflement dans le toluène.

### Exemple 7

Un précurseur époxyde DGEBA de la société DOW de masse 383 g/mol est mélangé à la stoéchiométrie avec un durcisseur amine MDEA. Ce mélange est réalisé en extrudeuse bi vis corotative de type Werner 40 avec ajout de 80 % de SBM2. Le jonc obtenu présentant un diamètre de 1 mm est bobiné en sortie d'extrudeuse. Ce jonc est co-tissé avec une fibre de verre de la société Owens Corning de tex 1200 présentant un ensimage de type 121A - RX. Le ratio Verre sur formulation est de 1,5. Le co-tissé obtenu est facilement manipulable et ne présente aucun phénomène de goutte. Le co-tissé obtenu est placé sous presse pendant 2 heures à 220°C. Après refroidissement la Tg obtenue est de 164,8°C et la Tα obtenue est de 160°C. Le matériau composite obtenu ne présente aucun gonflement dans le toluène.

## Revendications

1. Procédé de fabrication d'un matériau composite comprenant :
• une étape de transformation en filaments ou mèches d'une formulation comprenant :
- de 10 à 99 % en poids du poids total de la formulation d'au moins une résine thermodurcissable (I)
- de 1 à 80% en poids du poids total de la formulation d'un agent de contrôle de rhéologie (II) comprenant par exemple au moins un copolymère à blocs choisi parmi les copolymères à blocs S-B-M, B-M et M-B-M dans lesquels:
➢ chaque bloc est relié à l'autre au moyen d'une liaison covalente ou d'une ou plusieurs molécules intermédiaires reliées à l'un des blocs par une liaison covalente et à l'autre bloc par une autre liaison covalente,
➢ M est un polymère miscible avec la résine thermodurcissable,
➢ B est incompatible avec la résine thermodurcissable et avec le bloc M et sa température de transition vitreuse Tg est inférieure à la température d'utilisation du matériau thermodur,
➢ S est incompatible avec la résine thermodurcissable, et le bloc B et sa Tg ou sa température de fusion Tf est supérieure à la Tg de B,
- de 0 à 50 % en poids du poids total de la formulation d'au moins un matériau (III), choisi parmi les thermoplastiques, les additifs coeur-écorce, les élastomères fonctionnalisés, les copolymères S-B et les caoutchoucs réactifs ATBN ou CTBN,
• une étape de tissage ou tricotage conjointement avec des fibres organiques ou inorganiques, donnant des tissus ou tricots ; et
• une étape de compression à chaud desdits tissus ou tricots.

2. Procédé selon la revendication 1 **caractérisé en ce que** le bloc M est choisi parmi les polyméthacrylates de méthyle et les copolymères comprenant au moins 20% en poids de méthacrylate de méthyle.

3. Procédé selon la revendication 1 ou 2 **caractérisé en ce que** les blocs M des copolymères à blocs sont constitués de PMMA syndiotactique à au moins 75%.

4. Procédé selon l'une des revendications précédentes **caractérisé en ce que** les blocs M des copolymères à blocs comprennent en outre des monomères réactifs tels que le méthacrylate de glycidyle, le méthacrylate de tertiobutyle ou l'acide acrylique.

5. Procédé selon l'une des revendications précédentes **caractérisé en ce que** la Tg des blocs B est inférieure à 0°C, et de préférence inférieure à -40°C.

6. Procédé selon la revendication 5 **caractérisé en ce que** le bloc B est choisi parmi les poly(acrylate d'alkyle) tels que le polyacrylate de butyle, d'ethyle hexyle ou d'octyle et les polydiènes.

7. Procédé selon la revendication 6 **caractérisé en ce que** le bloc B est un polybutadiène, 1-4.

8. Procédé suivant la revendication 5 ou 6 **caractérisé en ce que** les diènes du bloc B sont hydrogénés.

9. Procédé suivant l'une des revendications précédentes **caractérisé en ce que** la Tg ou la Tf de S est supérieure à 23°C et de préférence supérieure à 50°C.

10. Procédé suivant la revendication 9 **caractérisé en ce que** S est du polystyrène.

11. Procédé suivant l'une des revendications précédentes **caractérisé en ce que** la masse molaire moyenne en masse des copolymères à blocs peut être comprise entre 10 000 g/mol et 500 000 g/mol.

12. Procédé suivant la revendication 11 **caractérisé en ce que** la masse molaire moyenne en masse des copolymères à blocs peut être comprise entre 20 000 g/mol et 200 000 g/mol.

13. Procédé suivant l'une des revendications précédentes **caractérisé en ce que** la proportion de l'agent (II) est de 10 à 60% pour respectivement 90 à 40% de (I) et avantageusement de 20 à 50% pour respectivement 80 à 50% de (I).

14. Procédée suivant l'une des revendications 1 à 13 **caractérisé en ce que** la résine thermodurcissable est une résine époxy thermodurcissable et un durcisseur.

15. Procédé selon l'une des revendications 1 à 14 **caractérisé en ce que** les fibres de renfort sont choisies parmi les fibres de verre, de carbone ou toutes matières organiques ou inorganiques similaires.

16. Tissus ou tricots obtenus selon le procédé de l'une des revendications 1 à 15.

## Claims

1. Process for the manufacture of a composite material comprising:
• a stage of converting into filaments or slivers a formulation comprising:
- from 10 to 99% by weight of the total weight of the formulation of at least one thermosetting resin (I),
- from 1 to 80% by weight of the total weight of the formulation of a rheology-controlling agent (II) comprising, for example, at least one block copolymer chosen from copolymers comprising S-B-M, B-M and M-B-M blocks in which:
➢ each block is connected to the other by means of a covalent bond or of one or more intermediate molecules connected to one of the blocks via a covalent bond and to the other block via another covalent bond,
➢ M is a polymer miscible with the thermosetting resin,
➢ B is incompatible with the thermosetting resin and with the M block and its glass transition temperature Tg is lower than the operating temperature for the thermoset material,
➢ S is incompatible with the thermosetting resin and the B block and its Tg or its melting point M.p. is greater than the Tg of B,
- from 0 to 50% by weight of the total weight of the formulation of at least one material (III) chosen from thermoplastics, core-shell additives, functionalized elastomers, S-B copolymers and ATBN or CTBN reactive rubbers,
• a stage of weaving or knitting in conjunction with organic or inorganic fibres, giving woven or knitted fabrics; and
• a stage of hot compression of the said woven or knitted fabrics.

2. Process according to Claim 1, **characterized in that** the M block is chosen from poly(methyl methacrylate)s and copolymers comprising at least 20% by weight of methyl methacrylate.

3. Process according to Claim 1 or 2, **characterized in that** the M blocks of the block copolymers are composed of syndiotactic PMMA to at least 75%.

4. Process according to one of the preceding claims, **characterized in that** the M blocks of the block copolymers additionally comprise reactive monomers, such as glycidyl methacrylate, tert-butyl methacrylate or acrylic acid.

5. Process according to one of the preceding claims, **characterized in that** the Tg of the B blocks is less than 0°C and preferably less than -40°C.

6. Process according to Claim 5, **characterized in that** the B block is chosen from poly(alkyl acrylate)s, such as poly(butyl acrylate), poly(ethylhexyl acrylate) or poly(octyl acrylate), and polydienes.

7. Process according to Claim 6, **characterized in that** the B block is a 1,4-polybutadiene.

8. Process according to Claim 5 or 6, **characterized in that** the dienes of the B block are hydrogenated.

9. Process according to one of the preceding claims, **characterized in that** the Tg or the M.p. of S is greater than 23°C and preferably greater than 50°C.

10. Process according to Claim 9, **characterized in that** S is polystyrene.

11. Process according to one of the preceding claims, **characterized in that** the weight-average molar mass of the block copolymers can be between 10 000 g/mol and 500 000 g/mol.

12. Process according to Claim 11, **characterized in that** the weight-average molar mass of the block copolymers can be between 20 000 g/mol and 200 000 g/mol.

13. Process according to one of the preceding claims, **characterized in that** the proportion of the agent (II) is from 10 to 60% for respectively 90 to 40% of (I) and advantageously from 20 to 50% for respectively 80 to 50% of (I).

14. Process according to one of Claims 1 to 13, **characterized in that** the thermosetting resin is a thermosetting epoxy resin and a hardener.

15. Process according to one of Claims 1 to 14, **characterized in that** the reinforcing fibres are chosen from fibres made of glass, of carbon or of any similar organic or inorganic material.

16. Woven or knitted fabrics obtained according to the process of one of Claims 1 to 15.

## Patentansprüche

1. Herstellungsverfahren für einen Verbundwerkstoff, welches Folgendes umfasst:
- einen Schritt, bei welchem eine Formulierung, welche die folgenden Bestandteile umfasst, zu Filamenten oder Vorgarn verarbeitet wird:
- zwischen 10 und 99 Gew.-%, bezogen auf das Gesamtgewicht der Formulierung, mindestens eines duroplastischen Stoffs (I),
- zwischen 1 und 80 Gew.-%, bezogen auf das Gesamtgewicht der Formulierung, eines Mittels zur Einstellung der rheologischen Eigenschaften (11), welches mindestens ein Blockcopolymer umfasst, das aus den Blockcopolymeren S-B-M, B-M und M-B-M gewählt ist, wobei:
- jeder Block mit einem anderen mittels einer kovalenten Bindung verbunden ist oder aber ein oder mehrere Zwischenmoleküle mit einem der Blöcke über eine kovalente Bindung und mit dem anderen Block über eine weitere kovalente Bindung verbunden sind,
- M ein Polymer ist, das mit dem duroplastischen Stoff mischbar ist,
- B mit dem duroplastischen Stoff und mit dem Block M unverträglich ist und seine Glasübergangstemperatur Tg unterhalb der Verwendungstemperatur der Werkstoffs, der in der Hitze nicht erweicht, liegt
- S mit dem duroplastischen Stoff und mit dem Block B unverträglich ist und seine Tg oder seine Schmelztemperatur Tf höher als die Tg von B ist,
- zwischen 0 und 50 Gew.-%, bezogen auf das Gesamtgewicht der Formulierung, mindestens eines Materials (III), welches aus den thermoplastischen Stoffen, den Kern-Hülle-Zusatzstoffen, den Elastomeren mit funktionellen Gruppen, den S-B-Copolymeren und den reaktiven Kautschuken ATBN oder CTBN gewählt ist,
- einen Schritt des Webens oder Strickens im Verbund mit organischen oder anorganischen Fasern, wobei Gewebe oder Strickstoffe entstehen; und
- einen Schritt, bei welchem die Gewebe oder Strickstoffe in der Hitze komprimiert werden.

2. Verfahren nach Anspruch 1, **dadurch gekennzeichnet, dass** der Block M aus den Polymethylmethacrylaten und den Copolymeren, die mindestens 20 Gew.-% an Methylmethacrylat umfassen, gewählt ist.

3. Verfahren nach Anspruch 1 oder 2, **dadurch gekennzeichnet, dass** die Blöcke M der Blockcopolymere zu mindestens 75 % aus syndiotaktischem PMMA bestehen.

4. Verfahren nach einem der vorhergehenden Ansprüche, **dadurch gekennzeichnet, dass** die Blöcke M der Blockcopolymere darüber hinaus reaktive Monomere wie etwa Glycidylmethacrylat, tert.-Butylmethacrylat oder Acrylsäure umfassen.

5. Verfahren gemäß einem der vorhergehenden Ansprüche, **dadurch gekennzeichnet, dass** die Tg der Blöcke B niedriger als 0 °C und vorzugsweise niedriger als -40 °C ist.

6. Verfahren nach Anspruch 5, **dadurch gekennzeichnet, dass** der Block B aus den Polyalkylacrylaten wie etwa Polybutyl-, Polyethylhexyl- oder Polyoctylacrylat und aus den Polydienen gewählt ist.

7. Verfahren nach Anspruch 6, **dadurch gekennzeichnet, dass** es sich bei dem Block B um Polybutadien-1,4 handelt.

8. Verfahren nach Anspruch 5 oder 6, **dadurch gekennzeichnet, dass** die Diene des Blocks B hydriert sind.

9. Verfahren nach einem der vorhergehenden Ansprüche, **dadurch gekennzeichnet, dass** die Tg oder die Tf von S höher als 23 °C und vorzugsweise höher als 50 °C ist.

10. Verfahren nach Anspruch 9, **dadurch gekennzeichnet, dass** es sich bei S um Polystyrol handelt.

11. Verfahren nach einem der vorhergehenden Ansprüche, **dadurch gekennzeichnet, dass** das Gewichtsmittel des Molekulargewichts der Blockcopolymere zwischen 10.000 g/mol und 500.000 g/mol liegen kann.

12. Verfahren nach Anspruch 11, **dadurch gekennzeichnet, dass** das Gewichtsmittel des Molekulargewichts der Blockcopolymere zwischen 20.000 g/mol und 200.000 g/mol liegen kann.

13. Verfahren nach einem der vorhergehenden Ansprüche, **dadurch gekennzeichnet, dass** der Anteil des Mittels (II) zwischen 10 und 60 % bei 90 beziehungsweise 40 % an (I) sowie vorteilhafterweise zwischen 20 und 50 % bei 80 beziehungsweise 50 % an (I) liegt.

14. Verfahren nach einem der Ansprüche 1 bis 13, **dadurch gekennzeichnet, dass** es sich bei dem duroplastischen Stoff um ein wärmehärtbares Epoxidharz und ein Härtungsmittel handelt.

15. Verfahren nach einem der Ansprüche 1 bis 14, **dadurch gekennzeichnet, dass** die Verstärkungsfasern aus Glasfasern, Kohlefasern oder beliebigen ähnlichen organischen oder anorganischen Materialien gewählt werden.

16. Gewebe oder Strickstoffe, die gemäß dem Verfahren eines der Ansprüche 1 bis 15 erhalten wurden.
